# EUROPEAN PATENT APPLICATION

(11) **EP 3 342 319 A1**
(43) Date of publication of application: **04.07.2018**
(21) Application number: 16207598.0
(22) Date of filing: 30.12.2016
(51) Int. Cl.: A47J 31/44

(54) **MACHINE PREPARING BEVERAGES FROM BULK INGREDIENT AND WATER**

(71) Applicant: Nestec S.A., 1800 Vevey (CH)
(72) Inventor: DUBIEF, Flavien, 1424 Champagne (CH); PAILLARD, Olivier, 25370 Métabief (FR); BUTSCHER, Silvio, 2054 Chezard-St-Martin (CH)
(74) Representative: Ducreux, Marie

(57) **Abstract**

The invention concerns a beverage preparation machine (100) comprising :
- at least one container (1) for storing a beverage ingredient in bulk, said container comprising a tank (11) and an outlet (12) for dispensing a dose of beverage ingredient,
- a water supply (105)
- at least one beverage preparation chamber (3), said chamber being positioned under the outlet (12) of the container, said chamber being configured to receive the dose of beverage ingredient from the outlet of the container and water from the water supply,
said machine being configured so that the dose of beverage ingredient is dispensed from the outlet of the container to the opened top (31) of the chamber along an essentially straight and downwardly oriented direction Dp,
said machine comprising a fan (4) configured for supplying at least one flow of air in the machine, wherein said machine comprises an air guiding assembly (5) configured :
- to convey the at least one flow of air supplied by the fan to the dispense area defined between the outlet (12) of the container and the top (31) of the chamber, and
- to guide and force the at least one flow of air to traverse said dispense area along a plane P that crosses the straight and downwardly oriented direction Dp of dispense of beverage ingredient, and
- to collect the at least one flow of air having traversed said dispense area, and
- to guide the at least one flow of air out of the machine.

## Description

### Field of the invention

The present invention relates to beverage dispensers preparing beverages from a beverage ingredient stored in a container and from which a dose of beverage ingredient is dispensed into a beverage preparation chamber to be mixed with a diluent.

### Background of the invention

Many beverages like espresso and other coffee beverages, milk beverages, chocolate beverages, ... are often prepared by mixing a beverage powder with a diluent. The beverage powder is usually stored in a tank or canister provided with a dosing device in order to deliver a dose of beverage powder in a mixing chamber supplied with a diluent, usually hot water.
The tank or canister of powder is usually placed above top opened mouth of the mixing chamber and a dosing device like a screw, a drawer or an auger doses and delivers the powder which falls in the chamber.
During the beverage preparation and depending on the technology used to mix the powder with the diluent (whipper, jet, baffles, ...), strong agitation of liquid can happen which induces a lot of mist and humidity, a part of which rises up to the top of the chamber and out of the chamber. Humidity can settle on the internal walls of the beverage machine positioned above the chamber, in particular this humidity can reach the device dosing the beverage ingredient above the chamber. The effect is drastic because humidity reacts with residues of beverage ingredient, most particularly if the beverage ingredient is soluble, and blocks this device if it is not regularly cleaned. Humidity can carry beverage ingredient out of the chamber too and dirty the internal walls of the machine.

It is known to use an extractor hood at the top of the chamber and to connect it to an evacuation fan in order to suck steam and powder fines flying above the chamber during the beverage preparation. The extractor hood avoids that steam flows up to the powder dosing device and the powder tank which would lead to a caking of the powder in these devices. The extractor hood avoids that fines of powder fly in the internal housing of the beverage preparation machine too. Yet, extractor hoods usually simply consist in an air sucking opening above the mixing chamber, and as a result, there is no real control of the path for air above the chamber. Then, to be efficient, extractor hoods are usually used with a powerful fan to guarantee that humidity is sucked, but the powerful generated flow of air sucks humidity and powder indifferently. It becomes necessary to provide a trap for powder and to regularly clean said trap or the machine to remove sucked powder therefrom.

Another solution consists in blowing hot air in the area of the beverage machine where powder is dispensed in order to avoid that steam condenses near to the powder dosing device as described in US 4,245,680, US 4,015,749, US 4,458,829 or US 3,822,810. Yet such beverage machines need heaters to provide hot air which increases the energy consumption of the machines. Even if heat is generated and recycled from an internal hot device of the machine like the boiler, the temperature of said heat is not controlled and can affect the properties of the beverage ingredient, in particular soluble coffee powder that can move to a glass state at a temperature above 40°C.

Another solution consists in blowing air inside the chamber along the direction of fall of the powder in the chamber and then preventing mist and humidity from rising through the top of the chamber like in US 4,194,651 or US 2,755,000. Yet the machines implementing this solution are not compact because they require additional vertical place to orient the flow of air inside the mixing chamber.

An object of the invention is to address at least some of the drawbacks of the prior art beverage preparation machines or at least to provide an alternative thereto.

### Summary of the invention

In a first aspect of the invention, there is provided a beverage preparation machine comprising :
- at least one container for storing a beverage ingredient in bulk, said container comprising a tank and an outlet for dispensing a dose of beverage ingredient,
- a water supply,
- at least one beverage preparation chamber, said chamber being positioned under the outlet of the container, said chamber being configured to receive the dose of beverage ingredient from the outlet of the container and water from the water supply,
   said machine being configured so that the dose of beverage ingredient is dispensed from the outlet of the container to the opened top of the chamber along an essentially straight and downwardly oriented direction Dp,
   said machine comprising a fan configured for supplying at least one flow of air in the machine,
   wherein said machine comprises an air guiding assembly configured :
   - to convey the at least one flow of air supplied by the fan to the dispense area defined between the outlet of the container and the top of the chamber, and
   - to guide and force the at least one flow of air to traverse said dispense area along a plane P, said plane P crossing the straight and downwardly oriented direction Dp of dispense of beverage ingredient, and
   - to collect the at least one flow of air having traversed said dispense area, and
   - to guide the at least one flow of air out of the machine.

The beverage preparation machine is configured for preparing a beverage by mixing a dose of beverage ingredient in bulk and a diluent, preferably water, even more preferably hot water.
The beverage ingredient in bulk can be a powder, free flowing particles, pellets, granulates, granules or grains. Preferably the bulk material is a soluble beverage powder like powders of instant coffee, milk, chocolate, instant tea, fruit, soup or pellets of such powders, or a powder of roast and ground coffee, or tea leaves or tea leaves powder.

The machine comprises at least one container for storing the beverage ingredient in bulk and dispensing the beverage ingredient through an outlet. Usually the container comprises or is associated to a dosing device in order to dispense a metered dose of beverage ingredient. The dosing device can be any known dosing technology like a screw, an auger, a drawer, a rotating disc.

The machine comprises a water supply so that a dose of water can be mixed with the beverage ingredient.

The machine comprises at least one beverage preparation chamber, wherein the beverage ingredient in bulk is mixed with a diluent to produce the beverage.
The beverage preparation chamber is preferably a chamber configured for enabling the dissolution of a soluble beverage ingredient with an aqueous liquid by contacting and mixing the ingredient with the liquid. The chamber can be the mixing chamber described in WO 2008/071613.
Alternatively, the beverage preparation chamber can be a brewing chamber configured to receive roast and ground coffee powder and water. In the brewing process, the heated water infuses and extracts coffee. The brewing chamber can contain a filter to allow beverage to drain from the infused food ingredient and water mixture It can be configured to be hermetically closed after powder dosing in order to receive and hold water under pressure.
In another alternative, the beverage preparation chamber can be a brewing chamber configured to receive tea leaves and water.

In another alternative embodiment, the beverage preparation chamber can be a drinking cup. This embodiment is adapted to the preparation of a beverage by dissolution of a soluble beverage ingredient with a diluent. Once the beverage ingredient has been dosed and put in the cup, the diluent can be introduced in the cup in the form of jets in order to dissolve the beverage ingredient. The drinking container is preferably retained in a container holder in order to be correctly positioned under the outlet of the beverage ingredient container.

The chamber is positioned under the outlet of the container and the top of the chamber is opened. Accordingly, the beverage ingredient dispensed from the outlet of the container is able to fall by gravity inside the chamber along an essentially straight and downwardly oriented direction Dp. Generally, the direction Dp is an essentially vertical direction. According to a less preferred embodiment, the direction Dp can be slightly inclined in respect with vertical, for example if the beverage ingredient consists in pellets dispensed through an inclined tube.
The chamber is supplied with water so that the beverage can be prepared. During this preparation, steam, mist, humidity rise and, due to the opened top of the chamber, in direction of the outlet of the container.

The machine comprises a fan configured for supplying at least one flow of air in the machine. The fan can create the flow of air either by sucking air from the outside of the machine inside the housing of the machine or by blowing air from the inside of the machine to the outside. Inside the machine the flow of air is guided through an air guiding assembly. Inside the machine the flow of air can be divided in several flows of air by the air guiding assembly, for example by a flow divider. This embodiment particularly applies when the beverage preparation machine comprises several beverage preparation chambers.
The air guiding assembly is configured to convey the at least one flow of air supplied by the fan to the dispense area defined between the outlet of the container and the chamber.
In this area defined between the outlet of the container and the top of the chamber, the air guiding assembly is configured to guide and force the conveyed flow of air to traverse the dispense area along a plane P, said plane P crossing the straight and downwardly oriented direction Dp of dispense of beverage ingredient.
Generally the plane P crosses the straight and downwardly oriented direction Dp of dispense of beverage ingredient so that the angle between the direction Dp and the plane P is about 90° +/- 30°. Preferably this angle is 90°.
According to one preferred embodiment, the plane P can be essentially perpendicular to the straight and downwardly oriented direction Dp of dispense of beverage ingredient. Since the direction Dp is generally an essentially vertical direction, it means that the conveyed flow of air preferably traverses the dispense area along an essentially horizontal plane P.
Guiding the air along the plane P has the effect that the air flow extends through all the surface above the chamber and sweeps across the whole surface of the dispense area along the plane P. The air creates a physical barrier along this plane P preventing steam, mist, vapour rising from the chamber to reach the outlet of the container. Steam, mist, vapour can either flow back to the chamber or can be trapped by the flow of air and moved out of the machine.
The air guiding assembly is configured to collect the at least one flow of air having traversed the dispense area at the edge of said area. Finally, the air guiding assembly is configured to guide the at least one flow of air from the dispense area out of the machine.

Generally, the air guiding assembly comprises an air guiding device designed to guide and force the at least one flow of air to traverse this dispense area and to collect said flow having traversed said dispense area.

Preferably, this air guiding device is designed to comprise :
- one beverage ingredient channel extending between the outlet of the container and the top of the chamber along an essentially straight and downwardly oriented direction Dp, and
- one air channel extending through the plane P, said plane P crossing the straight and downwardly oriented direction Dp.
Accordingly, this air guiding device comprises two channels which cross each other. Preferably, the plane P is essentially perpendicular to the straight and downwardly oriented direction Dp.
Preferably, whereas the beverage ingredient channel longitudinally extends essentially vertically, the air channel longitudinally extends essentially horizontally.

Preferably the beverage ingredient channel extends longitudinally by at least 10 mm.

According to one embodiment, the upper end of the beverage ingredient channel can be attached to the outlet of the beverage ingredient container. As a result, the beverage ingredient channel fully closes the path of the powder emerging from the outlet of the container. Preferably, the beverage ingredient channel is removably attached to the outlet. Accordingly, dismantling is possible for cleaning, maintenance and manufacturing facility

According to another embodiment, the upper end of the the beverage ingredient channel can be positioned at a distance under the outlet of the beverage ingredient container. This embodiment particularly applies to machine wherein the outlet of the container is movable and cannot be fixed to the air guiding device. In that embodiment, the upper end of the beverage ingredient channel is positioned as close as possible to the lower edge of the outlet of the beverage ingredient container. For example, the upper end of the beverage ingredient channel is at a distance of about 2 mm from the lower edge of the outlet of the beverage ingredient container.

Preferably the air channel extending through the plane P creates an air barrier presenting a thickness of at least 3 mm. Generally the thicker the air barrier is, the better the control of humidity is.

Preferably the air channel is close to the top of the chamber.
Preferably, the air guiding device, in particular the lower end of the beverage ingredient channel, can be attached to the top of the beverage preparation chamber.
As a result, the beverage ingredient channel fully closes the path of the powder flowing down to the chamber. Preferably, the beverage ingredient channel is removably attached to the chamber. Accordingly, dismantling is possible for cleaning, maintenance and manufacturing facility.
The air guiding device can be designed as a cover of the chamber.

In one embodiment, the air guiding device is attached to the top of the beverage preparation chamber and to the outlet of the beverage ingredient container. Accordingly, the whole path of the beverage ingredient flowing from the outlet of the container to the top of the chamber is protected.
According to one specific mode, the air guiding device can be made of one single piece of material with the beverage preparation chamber.

Generally, the air guiding device is dismountable from the top of the beverage preparation chamber and/or the top of the chamber. Accordingly, it can be cleaned easily. The air guiding device can be removably attached to the beverage preparation chamber and to the beverage ingredient container through screw, pins and holes, snapping, cooperating shapes,

Preferably, the air channel of the air guiding device comprises at least one inlet for introducing air and at least one outlet for collecting air and said at least one inlet and/or said at least one outlet comprise(s) a grid extending transversely through their sections. The grid can reinforce the structure of the air guiding device and prevents any object from being sucked or blown in the beverage preparation chamber by mistake.

The air channel of the air guiding device can be designed by taking into account the architecture of the machine that is to say the way the different internal devices of the machine are arranged in the housing of the machine. In particular, the air channel can be designed in accordance with the position of the chamber relatively to the position of the fan, or in accordance with the position of the air flow outlet out of the machine, or in accordance with the number of beverage preparation chambers in the machine and their positions one relatively to the others.

According to one embodiment, the air channel of the air guiding device can comprise one inlet for introducing air and one outlet for collecting air, and preferably the air channel between the inlet and the outlet is essentially straight.
Accordingly, with such an air guiding device, the flow of air is essentially straight and passes through the inlet to the outlet straightforward.
Such a design of the air guiding device can be advantageous in a machine wherein the air fan is positioned at the back side of the housing and the chamber is positioned at the front side of the machine. The air guiding assembly can guide air flow from the back to the front. Dispensing air at the front side of the machine can present the advantage of delivering beverage aroma close to the beverage consumer.
According to other embodiments, the air channel of the air guiding device can comprise one inlet for introducing air and one outlet for collecting air, and the air channel turns between the inlet and the outlet. For example, air can enter at the back side of the chamber and can be collected on one lateral side of the chamber rather than in the front. In this configuration air can still be dispensed near the front side of the machine and deliver beverage aroma close to the beverage consumer.

According to another embodiment, the air channel of the air guiding device can comprise two inlets for introducing air and one outlet for collecting air, and preferably the two inlets are transversely opposed one to the other and the outlet is positioned at the middle between both inlets.
Accordingly, with such an air guiding device, both flows of air flow in along the first same direction but in opposed ways, meet in the middle of the air guiding device and flow out through the outlet along a second direction perpendicular to the first direction.
The air is forced to flow through the outlet because it is the singe opening.

According to other embodiments, the air channel of the air guiding device can comprise :
- one inlet for introducing air and two outlets for collecting air, or
- two inlets for introducing air and two outlets for collecting air.

According to one embodiment, the air guiding assembly can comprise a powder trap and the air guiding assembly is configured for guiding the air flow collected from the dispense area through said powder trap before said air flow flows out the machine.
The powder trap can comprise an air conduit designing tortuous path for the collected air flow. As an example, the powder trap can comprise twists and turns.

According to one embodiment, the machine comprises several beverage preparation chambers, several containers and several air guiding assemblies, each air guiding assembly being associated to one beverage preparation chamber.
In that embodiment, flow supplied by the fan can be divided in several flows guided in each air guiding assemblies

Preferably, the air guiding assembly is configured to collect the flow of air having traversed the dispense area and to guide it out of the machine through an air flow outlet of the machine, said air flow outlet of the machine being positioned on the front face of the machine.
Generally this air flow outlet of the machine corresponds to the air flow outlet of the air guiding device.
Accordingly, aroma of the beverage in preparation may be captured by the flow air and dispensed in the front of the machine, that is in the area where the consumer stands, providing an attractive smell around the machine.

In a second aspect, there is provided a method for preparing a beverage in a beverage preparation machine,
said machine comprising :
- at least one container for storing a beverage ingredient in bulk, said container comprising a tank and an outlet for dispensing a dose of beverage ingredient,
- a water supply
- at least one beverage preparation chamber, said chamber being positioned under the outlet of the container,
- a fan configured to supply at least one flow of air in the machine,
   and said method comprising the steps of :
   - dispensing a dose of beverage ingredient from the outlet of the container to the chamber along an essentially straight and downwardly oriented direction Dp, and
   - introducing water from the water supply in the chamber,
   wherein, during at least the step of introduction of water, and preferably during both steps, at least one flow of air is supplied to the dispense area defined between the outlet of the container and the top of the chamber and said flow of air is forced to traverse said dispense area along a plane P, said plane P crossing the straight and downwardly oriented direction Dp of dispense of beverage ingredient, and then said flow of air is collected and guided out of the machine.

The method applies to a machine comprising at least one container for storing a beverage ingredient in bulk, a water supply, at least one beverage preparation chamber and a fan, these devices being such as described above.

The method for preparing the beverage comprises the step of dispensing a dose of beverage ingredient from the outlet of the container to the chamber along an essentially straight and downwardly oriented direction Dp and the step of introducing water from the water supply in the chamber. Beverage ingredient is received within the chamber and is able to be mixed with water supplied to the chamber.
These steps can happen simultaneously or can be successive. Usually the beverage ingredient is introduced in the chamber before water is supplied.

During at least the step of introduction of water, and preferably during all the time of preparation of the beverage, at least one flow of air is supplied to the dispense area defined between the outlet of the container and the top of the chamber. This flow of air is forced to traverse the dispense area along a plane P that crosses the straight and downwardly oriented direction Dp of dispense of beverage ingredient. After having traversed the dispense area, the flow of air is collected to be guided out of the machine or collected in a condensing reservoir.
This flow of air creates an air barrier or air cover above the top of the chamber, and accordingly, during the beverage preparation, this barrier or cover prevents to rise out of the chamber. In particular, humidity, vapour and mist are prevented from rising up to the outlet of the beverage ingredient container and from setting or condensing thereon

According to one embodiment, the speed of the flow of air can be constant during the beverage preparation.

According to another embodiment, the speed of the flow of air can be modulated during the beverage preparation. In particular the speed can be reduced during the step of dispensing a dose of beverage ingredient from the outlet of the container to the chamber. The speed can even be null during said step.
Whatever the embodiment, the speed of the air is preferably of at least 0,1 m/s during the step of introducing water from the water supply in the chamber. The flow of air can depend on the nature of the beverage ingredient dispensed in the beverage preparation chamber. Powders with low densities may require the use of a lower speed of air compared to pellets of powders.

The air flow traversing the dispense area can follow any direction as long as it expands along the plane P that crosses the straight and downwardly oriented direction Dp of dispense of beverage ingredient.

According to one first embodiment, one flow of air is supplied to the dispense area and said flow of air is forced to traverse said dispense area in a straight direction.

According to one second embodiment, the at least one flow of air enters the dispense area along a first direction Da1 and leaves the dispense area along a second direction Da2, said second direction Da2 being essentially perpendicular to the first direction Da1.
In one mode of said second embodiment, two flows of air enter the dispense area along the same first direction Da1 but in opposed ways, meet above the top of the chamber and the resulting merged air flow evacuates along the second direction Da2 and along the same way essentially perpendicular to the first direction Da1.

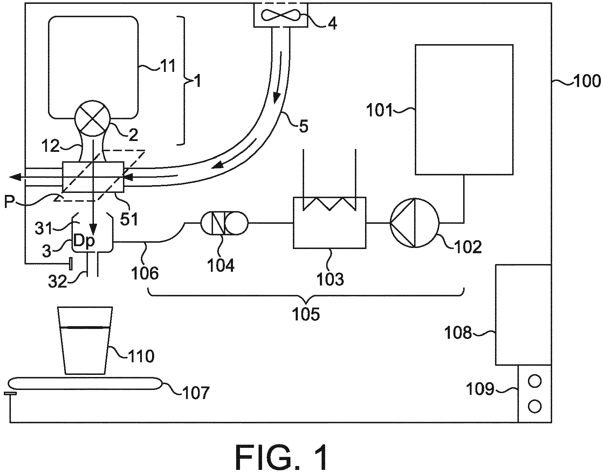

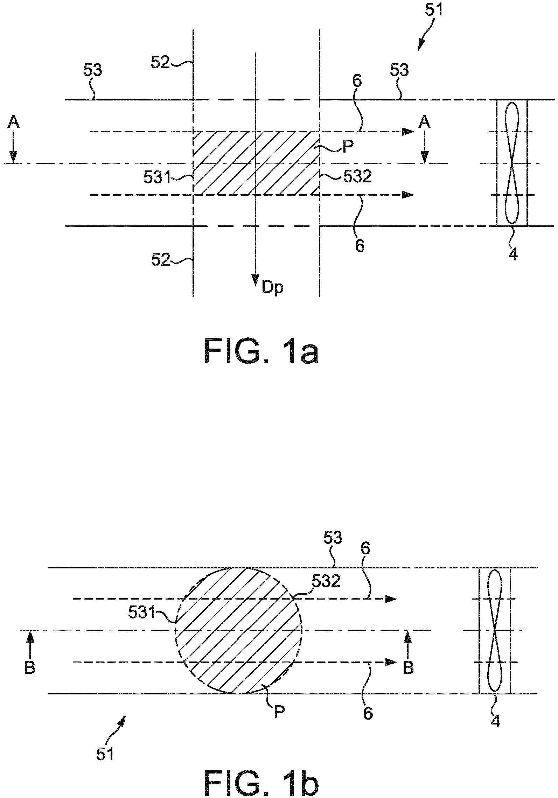

In the present application the terms "internal", "lateral", "top", "bottom", "upper", "lower", "back", "front" are used to describe the relational positioning of features of the invention. These terms should be understood to refer to the beverage preparation machine and its internal devices in their normal orientation when used for the production of a beverage as shown in the figures 1, 2, 4, 5, 6, 7.

The above aspects of the invention may be combined in any suitable combination. Moreover, various features herein may be combined with one or more of the above aspects to provide combinations other than those specifically illustrated and described. Further objects and advantageous features of the invention will be apparent from the claims, from the detailed description, and annexed drawings.

### Brief description of the drawings

The characteristics and advantages of the invention will be better understood in relation to the following figures :
- Figure 1 is a schematic illustration of a beverage preparation device according to the invention,
- Figures 1 a and 1 b are schematic illustration of the air guiding device used in the beverage preparation device of Figure 1,
- Figures 2 and 3 are perspective views of an assembly of a container, a chamber and an air guiding device,
- Figure 4 is vertical section of the assembly of Figures 2 and 3,
- Figure 5 is a top view of the chamber and the air guiding device of Figures 2 and 3,
- Figure 5a is a side view of the chamber of Figure 5 attached to the air guiding assembly,
- Figure 5b is a bottom view of the chamber of Figure 5 attached to the air guiding assembly,
- Figure 5c is a vertical cross section view of the chamber of Figure 5 attached to the air guiding assembly,
- Figure 6 is a perspective view of an assembly of two containers, two chambers and an air guiding assembly,
- Figure 7 is a vertical section view of a part of Figure 6,
- Figures 8a and 8b are perspective and top views of the air guiding assembly of Figures 6 and 7,
- Figure 8c is a perspective view of the air guiding device of Figures 8a and 8b.

### Detailed description of the drawings

**Figure 1** schematically illustrates a beverage production apparatus 100. The apparatus includes a mixing chamber 1 for producing a beverage from a beverage ingredient and an aqueous liquid, preferably water, entering the chamber.
The beverage ingredient is stored in a container 11. The container can be a hopper which is permanent or a disposable package containing the beverage ingredient.
A dose of beverage ingredient is metered and dispensed by a dosing device 2. The dosing device has the primary function to meter upon request doses of ingredient into mixing chamber 3. The dosing device dispenses the dose of beverage ingredient in the chamber 1, by gravity fall through the opened 31 of the chamber along an essentially straight and downwardly oriented direction Dp.
The dosing device 2 can be any suitable system such as a dosing screw, a reciprocating dosing drawer or a rotating disc. The dosing technology is also of course dependent on the nature of the soluble ingredient. The beverage ingredient is typically a dry beverage powder, preferably a soluble powder, even more preferably instant coffee. However, it could also be roast and ground powder or pellets of agglomerated soluble powder.
The chamber is fed upon request with ingredient automatically as prompted by a controller 108 and command 109.
A liquid, preferably water, supplying system 105 is provided in the machine to be able to feed water in the chamber 3, more particularly, hot water.
The water supplying system 105 comprises :
- a tank 101 that can be replenished with fresh water, or eventually connected to tap water,
- a water pump 102 for pumping water from the tank 101. The pump can be any type of pump such as a piston pump, diaphragm pump or a peristaltic pump.
- a water heater 103 such as a thermoblock or a cartridge type heater to heat the pumped water, alternatively or in addition to, the machine can comprise a water cooler in a line bypassing the heater,
- a non-return valve 104.
Finally water is fed into the mixing chamber by a tube 106.

As illustrated in figure 1, the chamber 1 can be placed directly above a service tray 107 onto which is placed a drinking cup 110 to receive the beverage liquid. Generally, the mixing chamber 3 is removable from the machine for cleaning and optionally for dosing. Usually the machine comprises a mixing chamber receiving area to removably fix the chamber inside and provide cooperation between the mixing chamber liquid inlet and the liquid supply tube 106.

The controller 108 can coordinate dosing of the beverage ingredient by the dosing device 2 and liquid by the pump 102 upon the user actuating or being prompted to press the command 109 on the apparatus.

The machine comprises a fan 4 configured for supplying at least one flow of air in the machine. In Figure 1, air is sucked from outside and supplied to an air guiding assembly 5. This air guiding assembly 5 conveys the flow of air supplied to the dispense area defined between the outlet 12 of the container and the top 31 of the chamber. The air guiding assembly 5 guides and forces the flow of air to traverse the dispense area along a plane P that crosses the straight and downwardly oriented direction Dp of dispense of beverage ingredient. The air guiding assembly 5 collects the flow of air having traversed the dispense area and guides the flow of air out of the machine. The air guiding assembly 5 usually comprises an air guiding device 51 designed to guide and force the flow of air to traverse the dispense area and to collect said flow having traversed said dispense area.

Figures 1a and 1b illustrate the general principle of the air guiding device 51 used in Figure 1.
Figure 1a is a vertical section of the schematic illustration of the air guiding device 51 along plane BB (see Figure 1b). The air guiding device 51 comprises one beverage ingredient channel 52 configured for dispensing the beverage ingredient. This beverage ingredient channel 52 extends along an essentially straight and downwardly oriented direction Dp. In figure 1 and 1a, the channel is vertically oriented, yet, this channel can also be tilted versus vertical as long as it is able to dispense beverage ingredient by gravity fall.
The air guiding device comprises one air channel 53 configured to guide an air flow 6 sucked by a fan 4 downstream to the air guiding device (in an alternative mode, the fan can be positioned upstream and can blow a flow of air to the guiding device). The air channel 53 extends through the plane P that crosses the straight and downwardly oriented direction Dp of the beverage ingredient channel. Accordingly, the air channel 53 and the beverage ingredient channel 52 cross each other
Consequently, the air flow 6 guided through the air channel 53 extends along said plane P while it crosses the beverage ingredient channel 52 and forms a physical barrier between the downstream part of the beverage ingredient channel, cooperating with the beverage preparation chamber, and the upstream part of the beverage ingredient channel, cooperating with the outlet of the beverage ingredient container. In particular, this air channel 53 extending along the plane P prevents humidity and mist from rising to the upstream part of the beverage ingredient channel. The air flow can carry out humidity and mist in direction of the fan.
The air inlet 531 and the air outlet 532 of the air channel can comprise holes or a grid to reinforce the structure of the device and to prevent objects from reaching the chamber.
Figure 1b is a horizontal section of the air guiding device 51 along plane AA (see Figure 1a) illustrating how the plane P forms a barrier for beverage ingredient falling from the container outlet.

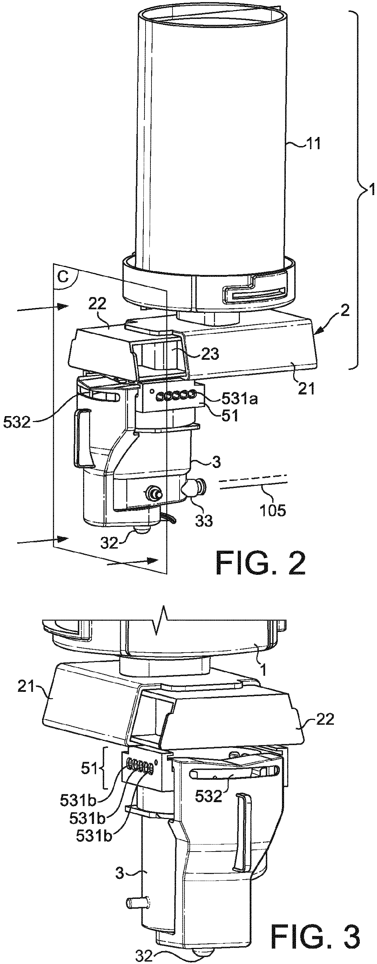

**Figure 2** is a lateral perspective view of an embodiment of the assembly of a container 1, a chamber 3 and an air guiding device 51 that can be used in a beverage preparation machine according to the invention. **Figure 3** corresponds to the perspective view of the same embodiment but viewed from the other lateral side.

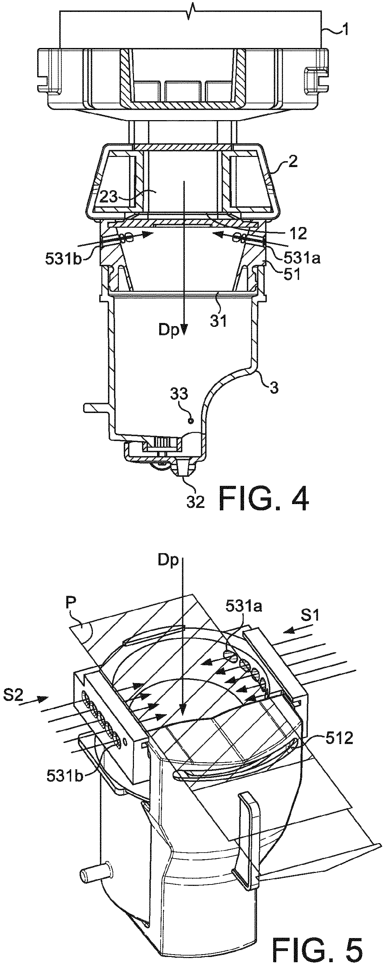

The container 1 comprises a tank 11. The bottom of the tank cooperates with a dosing unit 2. The dosing unit comprises a housing 21 in which a drawer 22 with a dosing cavity 23 slides. Further to a back and forth sliding movement of the drawer, the cavity is successively filled with beverage and emptied. The bottom of the cavity 23 defines the outlet 12 of the container through which beverage ingredient falls. In Figures 2 and 3, the drawer is represented in its dispensing position that is in the position where ingredient falls along an essentially straight and downwardly oriented direction Dp as further illustrated in Figure 4.
The beverage preparation chamber 3 is positioned under the outlet 12 of the container. The top 31 of the chamber is opened. Accordingly the chamber is able to receive the metered dose of ingredient from the drawer once it falls by gravity. The chamber 3 is connected to the water supply 105 through a diluent inlet 33. Beverage is delivered through the outlet 32 at the bottom of the chamber.
The air guiding device 51 is positioned between the bottom of the cavity 23 of the dosing unit and the top of the chamber. It is attached to the top of the chamber but not to the bottom of the cavity 23 since the latter is movable. The air guiding device 51 comprises two air inlets 531 a, 531 b positioned on each lateral side and one air outlet 532 positioned on the front side.
These positions of the air inlets and the air outlet is particularly adapted to the internal architecture of the present beverage preparation machine : actually, due to the position of the dosing drawer 22 at the back side of the beverage preparation chamber 3, it can be simpler to convey air to the dispense area through each lateral sides of the dispense area.

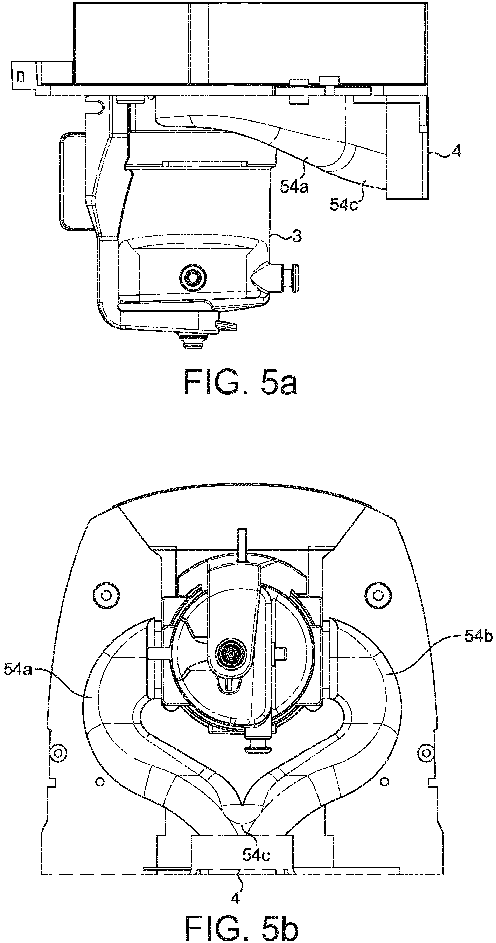

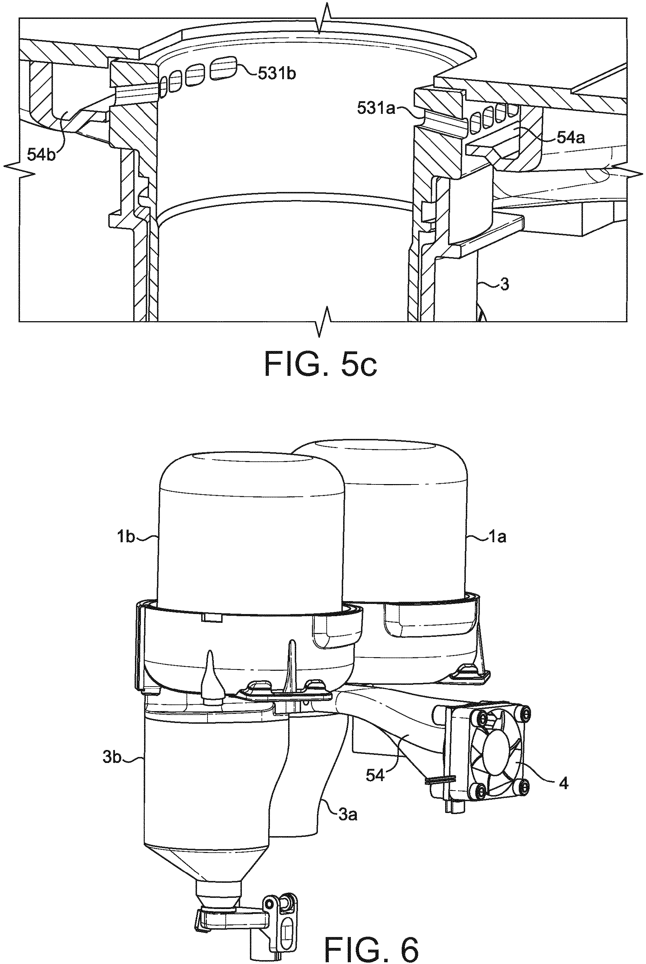

**Figure 4** is a vertical section of the assembly of Figure 2 along plane C (see Figure 2) and **Figure 5** is a top view of the assembly from which the beverage ingredient container has been removed. The outlet 12 of the container 1 dispenses beverage ingredient along an essentially straight and downwardly oriented direction Dp in the chamber through the opened top 31 of the chamber.
Air is introduced through two lateral air inlet 531a, 531b oriented along opposed ways S1, S2. Figure 4 shows how the conduits 531a, 531b are slightly inclined upwardly. Both flows of air S1, S2 meet above the chamber top opening, where air extends along a plane that crosses the straight and downwardly oriented direction Dp of dispense of beverage ingredient.
Each of both inlets is subdivided in five conduits. All these conduits extend essentially along the plane P and accordingly enable a better control of the flow of air inside this plane P as illustrated with the arrows in the figures.
The air guiding device 51 comprises a single air outlet 532 collecting the air introduced by the air inlets. The air flows out of the air guiding device 51 along a direction perpendicular to both air inlets.

The air guiding device 51 itself can be an assembly of different pieces integrating either the air outlet or the air inlets. In the illustrated embodiment of Figures 2 to 5, all the air inlets 531 a, 531 b are part of the same piece of material attached on the top of the chamber, whereas the air outlet 532 is part of another part of material that is attached to the front side of the chamber.

**Figures 5a and 5b** illustrate the two tubes 54a, 54b supplying air from a fan 4 to the air conduits 531a, 531b respectively. Both tubes emerge from a common inlet tube 54c at the side of the fan. The common inlet tube 54c divide in two tubes 54a, 54b each extending along one side of the chamber and supplying air directly in the conduits 531 a, 531 b respectively.
The vertical cross section of **Figure 5c** illustrates how the ends of the tubes 54a, 54b contact the piece of material the conduits 531 a, 531 b are made of in order to fully control the movement of air in the air guiding assembly and avoid any leak.

**Figure 6** is a perspective view of an alternative assembly of two containers 1a, 1b, two chambers 3a, 3b and an air guiding assembly that can be used in a beverage preparation machine according to the invention.
Each container 1 a, respectively 1 b, is associated to one dedicated chamber 3a, respectively 3b, so that a dose of beverage ingredient dispensed from one container falls in its dedicated chamber. Such an assembly can be used in a beverage preparation machine such as illustrated in Figure 1, each chamber 3a, 3b being independently connected to the diluent supply 105. Each container can store a particular beverage ingredient, such as instant coffee in the first container 1a and milk powder in the second container 1b. Each chamber can present a specific shape adapted to the preparation of a specific beverage, like coffee from instant coffee in the first chamber 3a, and milk or frothed milk from milk powder in the second chamber 3b.
The assembly comprises an air guiding assembly 5 providing air to both subassemblies of chamber and container. Air is provided by a common fan 4.

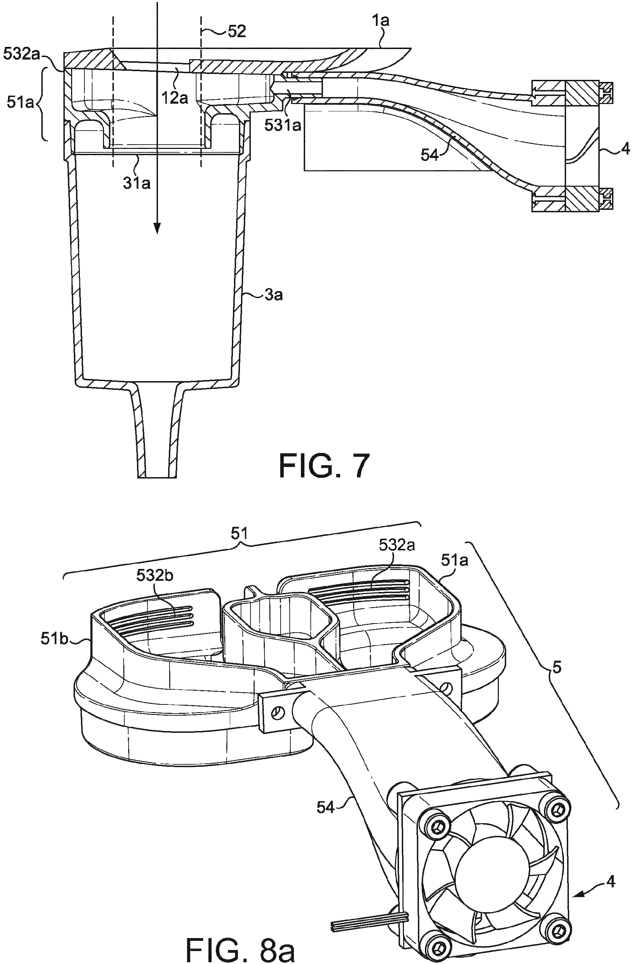

**Figure 7** is a vertical section view of the assembly of Figure 6 extending through the container 1 a and its associated chamber 3a.
The container 1 comprises a tank. The bottom of the tank usually comprises a dosing unit (not represented) to dispense a dose of beverage ingredient through the container outlet 12. The dosing unit can be a rotating dosing disc provided with a metered aperture. At the container outlet 12, ingredient falls along an essentially straight and downwardly oriented direction Dp in the beverage preparation chamber 3a through the opened top 31a of said chamber defining a dispense area.
Air blown by the fan 4 is conveyed to the top of the mixing chamber and guided by a tube in an air guiding device 51, a part of which 51 a cooperates with the top 31 a of the chamber and the bottom of the outlet 12a of the container. **Figure 8a** illustrates how the air guiding device 51 comprises two parts 51a and 51b each cooperating with one dedicated beverage chamber and one dedicated beverage ingredient container.
Consequently, as illustrated in Figure 7, the air guiding device 51 a is positioned between the outlet 12a of the container and the top 31 a of the chamber. The air guiding device comprises an essentially vertical wall defining a beverage ingredient channel 52 extending between the outlet of the container and the top of the chamber along the essentially straight and downwardly oriented direction Dp.
The air guiding device comprises one air inlet 531 a and one air outlet 532a. Internally, the air guiding device is designed in order to force the flow of air introduced in the air inlet 531a to traverse said dispense area along a plane P perpendicular to the straight and downwardly oriented direction Dp of dispense of beverage ingredient, that is the beverage ingredient channel.

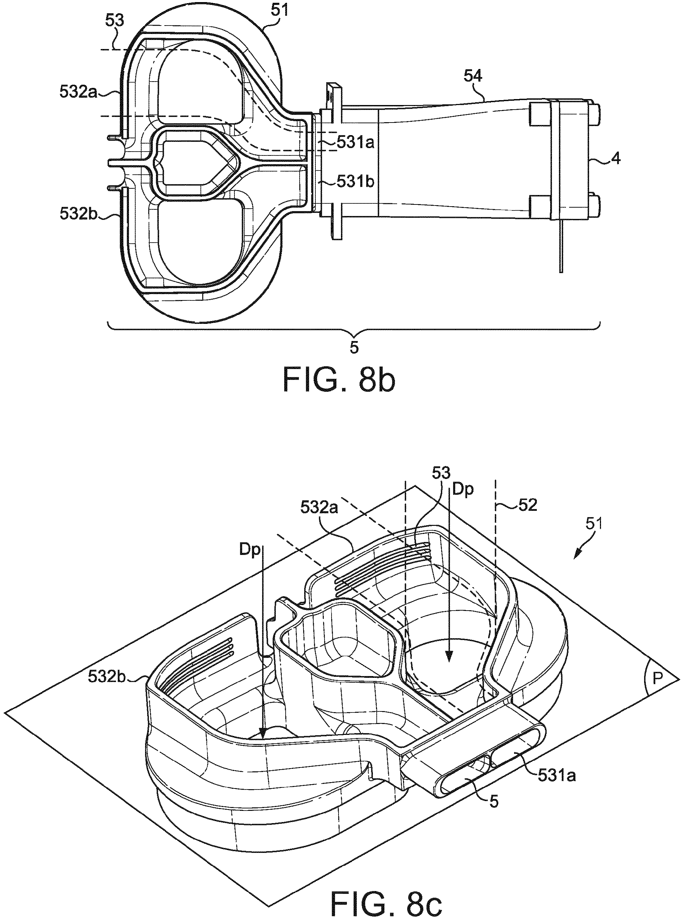

**Figures 8b and 8c** illustrate how the air guiding device 51 is designed to guide air from the air inlet 531a to the air outlet 532a : the air guiding device designs an air channel 53 extending the plane P perpendicular to the straight and downwardly oriented direction Dp of dispense of beverage ingredient.
Accordingly, the air guiding device 51 a designs two channels 52, 53 which cross each other. Whereas the beverage ingredient channel 52 longitudinally extends essentially vertically along direction Dp, the air channel 53 longitudinally extends essentially horizontally along plane P.
In a similar manner, the second part 51b of the air guiding device cooperates with the top 31 b of the other chamber and the bottom of the outlet 12b of the other container.
In both parts 51 a, 51 b of the air guiding device, the flow of air traverses the dispense area along an essentially straight path from the air inlet 531a, 531b to the air outlet 532a, 532b. These positions of the air inlets and the air outlets is particularly adapted to the internal architecture of the illustrated beverage preparation machine : actually, since the space at the back side of the beverage preparation chamber 3 is free, it is possible to position a tube 54 for conveying air to the dispense area at this back side. Accordingly, air is conveyed to the dispense area from the back side of the dispense area and evacuated at the front side.

The beverage preparation machine of the present invention presents the advantage of presenting an improved robustness and requiring less maintenance.
Another advantage of the machine is that it enables an optimal control of the flow of air inside the machine and, as a result, of humidity and mist inside the machine.
Another advantage of the machine is that it can generate beverage aroma around the machine and provide an attractive ambiance.

Although the invention has been described with reference to the above illustrated embodiments, it will be appreciated that the invention as claimed is not limited in any way by these illustrated embodiments.
Variations and modifications may be made without departing from the scope of the invention as defined in the claims. Furthermore, where known equivalents exist to specific features, such equivalents are incorporated as if specifically referred in this specification.
As used in this specification, the words "comprises", "comprising", and similar words, are not to be interpreted in an exclusive or exhaustive sense. In other words, they are intended to mean "including, but not limited to".

### List references in the drawings :

- container: 1, 1a, 1b
- tank: 11
- outlet: 12, 12a
- dosing unit: 2
- housing: 21
- drawer: 22
- dosing cavity: 23
- chamber: 3, 3a, 3b
- top: 31,31a
- outlet: 32
- diluent inlet: 33
- fan: 4
- air guiding assembly: 5
- air guiding device: 51, 51 a, 51 b
- beverage ingredient channel: 52, 52a
- air channel: 53, 53a
- air inlet: 531, 531a, 531b
- air outlet: 532, 532a, 532b
- tube: 54,54a,54b
- air flow: 6
- frame: 7
- beverage preparation machine: 100
- water tank: 101
- pump: 102
- heater: 103
- valve: 104
- water supply: 105
- pipe: 106
- control: 108
- command: 109
- drip tray: 107
- drinking cup: 110

## Claims

1. Beverage preparation machine (100) comprising :
- at least one container (1) for storing a beverage ingredient in bulk, said container comprising a tank (11) and an outlet (12) for dispensing a dose of beverage ingredient,
- a water supply (105)
- at least one beverage preparation chamber (3), said chamber being positioned under the outlet (12) of the container, said chamber being configured to receive the dose of beverage ingredient from the outlet of the container and water from the water supply,
said machine being configured so that the dose of beverage ingredient is dispensed from the outlet of the container to the opened top (31) of the chamber along an essentially straight and downwardly oriented direction Dp,
said machine comprising a fan (4) configured for supplying at least one flow of air in the machine, wherein said machine comprises an air guiding assembly (5) configured :
- to convey the at least one flow of air supplied by the fan to the dispense area defined between the outlet (12) of the container and the top (31) of the chamber, and
- to guide and force the at least one flow of air to traverse said dispense area along a plane P, said plane P crossing the straight and downwardly oriented direction Dp of dispense of beverage ingredient, and
- to collect the at least one flow of air having traversed said dispense area, and
- to guide the at least one flow of air out of the machine.

2. Beverage preparation machine according to the precedent claim, wherein the plane P is essentially perpendicular to the straight and downwardly oriented direction Dp of dispense of beverage ingredient.

3. Beverage preparation machine according to Claim 1 or 2, wherein the air guiding assembly (5) comprises an air guiding device (51) designed to guide and force the at least one flow of air to traverse this dispense area and to collect said flow having traversed said dispense area.

4. Beverage preparation machine according to Claim 3, wherein the air guiding device (51) is designed to comprise :
- one beverage ingredient channel (52) extending between the outlet of the container and the top of the chamber along an essentially straight and downwardly oriented direction Dp, and
- one air channel (53) extending through the plane P crossing the straight and downwardly oriented direction Dp.

5. Beverage preparation machine according to any one of Claims 3 or 4, wherein the beverage ingredient channel (52) extends longitudinally by at least 10 mm.

6. Beverage preparation machine according to any one of Claims 3 to 5, wherein the air guiding device is attached to the top of the beverage preparation chamber.

7. Beverage preparation machine according to any one of Claims 3 to 6, wherein the air guiding device (51) is attached to the bottom of the outlet of the container.

8. Beverage preparation machine according to any one of Claims 3 to 7, wherein the air channel (53) of the air guiding device comprises at least one inlet (531) for introducing air and at least one outlet (532) for collecting air and said at least one inlet and/or said at least one outlet comprise(s) a grid extending transversely through their sections.

9. Beverage preparation machine according to any one of Claims 3 to 8, wherein the air channel (53) of the air guiding device comprises one inlet (531) for introducing air and one outlet (532) for collecting air.

10. Beverage preparation machine according to any one of Claims 3 to 8, wherein the air channel (53) of the air guiding device comprises two inlets (531 a, 531 b) for introducing air and one outlet (532) for collecting air.

11. Beverage preparation machine according to any one of the previous claims, wherein the machine comprises several beverage preparation chambers (3a, 3b), several beverage ingredient containers (1a, 1b) and several air guiding assemblies (51 a, 51 b), each air guiding assembly being associated to one beverage preparation chamber.

12. Beverage preparation machine according to any one of the previous claims, wherein the air guiding assembly (51) is configured to collect the flow of air having traversed the dispense area and to guide it out of the machine through an air flow outlet of the machine, said air flow outlet of the machine being positioned on the front face of the machine.

13. Method for preparing a beverage in a beverage preparation machine,
said machine comprising :
- at least one container (1) for storing a beverage ingredient in bulk, said container comprising a tank (11) and an outlet (12) for dispensing a dose of beverage ingredient,
- a water supply (105),
- at least one beverage preparation chamber (3), said chamber being positioned under the outlet of the container,
- a fan (4) configured to supply at least one flow of air in the machine, and said method comprising the steps of :
- dispensing a dose of beverage ingredient from the outlet (12) of the container to the top (31) of the chamber along an essentially straight and downwardly oriented direction Dp, and
- introducing water from the water supply (105) in the chamber (3),
wherein, during at least the step of introduction of water, at least one flow of air (6) is supplied to the dispense area defined between the outlet of the container and the chamber and said flow of air is forced to traverse said dispense area along a plane P, said plane P crossing the straight and downwardly oriented direction Dp of dispense of beverage ingredient, and then said flow of air is collected and guided out of the machine.

14. Method according to the previous claim wherein one flow of air is supplied to the dispense area and said flow of air is forced to traverse the dispense area in a straight direction.

15. Method according to Claim 13 wherein the at least one flow of air enters the dispense area along a first direction Da1 and leaves the dispense area along a second direction Da2, said second direction Da2 being perpendicular to the first direction Da1.
